# DEMANDE DE BREVET EUROPEEN

(11) **EP 0 843 165 A1**
(43) Date de publication de la demande: **20.05.1998**
(21) Numéro de dépôt: 97402730.2
(22) Date de dépôt: 14.11.1997
(51) Int. Cl.: G01J 1/42

(54) **Dispositif de détection du point d'impact d'un faisceau lumineux peu divergent**

(30) Priorité: 18.11.1996 FR 9614023
(71) Demandeur: COMMISSARIAT A L'ENERGIE ATOMIQUE, 75015 Paris (FR)
(72) Inventeur: Menil, Albert, 33113 Saint Symphorien (FR)
(74) Mandataire: Dubois-Chabert, Guy

(57) **Abrégé**

Ce dispositif comprend un premier élément (4) dont un côté reçoit le faisceau (2) et qui est fait d'un matériau émettant une lumière visible sous l'impact de ce faisceau, un ensemble de fibres optiques (8) dont des premières extrémités sont fixées dans le premier élément, du deuxième côté de celui-ci et suivant une configuration déterminée et un deuxième élément (o) qui maintient les deuxièmes extrémités des fibres suivant cette configuration. Chaque fibre transmet la lumière engendrée lors d'un impact du faisceau au voisinage de la première extrémité de cette fibre. On peut ainsi repérer la position de cet impact en observant les deuxièmes extrémités des fibres. Application au réglage d'un faisceau laser.

## Description

### DOMAINE TECHNIQUE

La présente invention concerne un dispositif de détection du point d'impact d'un faisceau lumineux peu divergent.

Par « faisceau lumineux peu divergent », on entend un faisceau lumineux dont la divergence est environ égale à celle d'un faisceau laser (divergence de l'ordre de 20 mrd ou moins).

Le faisceau lumineux peut provenir d'une source de lumière incohérente collimatée ou d'une source de lumière cohérente (laser).

La présente invention s'applique notamment au réglage d'un faisceau laser.

Plus généralement, l'invention trouve des applications dans tous les domaines de l'industrie et dans tous les laboratoires où l'on est amené à faire des réglages de faisceaux lasers dans des conditions difficiles, par exemple lorsque ces réglages présentent des risques pour ceux qui les font (cas du domaine des explosifs, de la pyrotechnie de spectacle, des locaux sombres par exemple) ou lorsque les zones de réglage sont éloignés du local où se trouve le laser.

En effet, il est toujours difficile de régler un faisceau laser vers un endroit précis quand on travaille seul ou quand on ne voit pas l'impact laser parce qu'il est soit situé trop loin soit caché par un obstacle.

Il faut alors se déplacer pour voir le résultat du réglage précédent, faire les corrections et recommencer ces opérations jusqu'à l'obtention du bon résultat.

Il est donc intéressant de disposer d'un détecteur du point d'impact d'un faisceau laser qui soit simple et peu coûteux et ne comporte aucun risque pour les utilisateurs.

### ÉTAT DE LA TECHNIQUE ANTÉRIEURE

On connaît déjà un dispositif de détection du point d'impact d'un faisceau lumineux, par exemple un faisceau laser.

Ce dispositif connu est un système vidéo qui comprend une caméra et un moniteur.

On place la caméra de manière à visualiser l'endroit où aura lieu l'impact laser.

Cette visualisation se fait sous un certain angle.

Il en résulte un défaut de parallaxe qui est nuisible à un bon réglage.

### EXPOSÉ DE L'INVENTION

La présente invention a pour but de remédier à l'inconvénient précédent tout en étant simple et peu coûteuse.

Le dispositif objet de l'invention comprend un élément qui est associé à un faisceau de fibres optiques et que l'on place à l'endroit où l'on veut amener un faisceau lumineux, par exemple un faisceau laser, et permet de supprimer le défaut de parallaxe mentionné plus haut.

La position du point d'impact du faisceau laser peut alors être retransmise au poste de réglage du laser au moyen du faisceau de fibres optiques.

De façon précise, la présente invention a pour objet un dispositif de détection du point d'impact d'un faisceau lumineux peu divergent, ce dispositif étant caractérisé en ce qu'il comprend :
- un premier élément dont un premier côté est destiné à recevoir le faisceau lumineux et qui est fait d'un matériau apte à émettre une lumière visible sous l'impact de ce faisceau lumineux,
- un ensemble de fibres optiques dont des premières extrémités respectives sont fixées dans le premier élément, du deuxième côté de celui-ci et suivant une configuration déterminée, et
- un deuxième élément qui maintient les deuxièmes extrémités respectives des fibres optiques dans cette configuration déterminée,
- chaque fibre étant ainsi apte à transmettre, jusqu'à sa deuxième extrémité, la lumière visible engendrée par le premier élément lors d'un impact du faisceau lumineux au voisinage de la première extrémité de cette fibre, de manière à pouvoir repérer la position de cet impact en observant les deuxièmes extrémités des fibres.

Ce dispositif est compatible avec le port de lunettes de sécurité vis-à-vis du rayonnement laser (dans le cas où le faisceau lumineux est un faisceau laser).

En effet, il existe de telles lunettes qui, tout en arrêtant un faisceau laser, n'empêchent pas de voir la lumière transmise par les fibres optiques et résultant de la luminescence du premier élément.

A ce sujet, on consultera le document suivant :
EP-A-0240385 (invention de A. Le Bihan).

Selon un mode de réalisation particulier du dispositif objet de l'invention, le deuxième élément est transparent à ladite lumière visible et les deuxième extrémités respectives des fibres optiques sont fixées dans ce deuxième élément suivant la configuration déterminée.

Selon un mode de réalisation préféré de l'invention, le premier élément est un empilement de plaques ayant un axe commun, faites dudit matériau, ayant des tailles différentes et rangées par tailles décroissantes de façon que le premier élément présente des marches, des trous sont formés dans les plaques autour de l'axe commun à celles-ci, les fonds des trous étant situés sous lesdites marches et formant ladite configuration déterminée lorsqu'ils sont observés suivant l'axe commun, et les premières extrémités respectives des fibres optiques sont logées dans ces trous et en contact avec le fond de ceux-ci.

Selon un premier mode de réalisation particulier de l'invention, les trous sont parallèles à l'axe commun aux plaques et formés à partir du deuxième côté du premier élément.

Dans ce cas, on peut réaliser un dispositif conforme à l'invention dans lequel aucun des trous ne débouche du premier côté du premier élément ou dans lequel l'un des trous s'étend suivant l'axe commun aux plaques et débouche du premier côté du premier élément tandis qu'aucun des autres trous ne débouche de ce premier côté.

Dans ce cas où le trou qui s'étend suivant l'axe commun débouche du premier côté du premier élément, le deuxième élément peut comprendre un trou traversant ce deuxième élément et relié, par l'une des fibres optiques, au trou du premier élément qui débouche du premier côté de celui-ci.

Selon un deuxième mode de réalisation particulier de l'invention, les trous sont perpendiculaires à l'axe commun aux plaques et formés à partir de la périphérie de ces plaques.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1A est une vue schématique du premier élément d'un mode de réalisation particulier du dispositif objet de l'invention observé du côté opposé à celui qui reçoit un faisceau lumineux,
- la figure 1B est une vue de côté schématique de ce premier élément,
- la figure 2A est une vue schématique du deuxième élément de ce mode de réalisation particulier, observé du côté où arrivent des optiques,
- la figure 2B est une vue de côté schématique de ce deuxième élément,
- la figure 3 illustre schématiquement un exemple d'utilisation de ce mode de réalisation particulier,
- la figure 4A est une vue schématique du premier élément d'un autre mode de réalisation particulier du dispositif objet de l'invention, observé du côté opposé à celui qui reçoit un faisceau lumineux, et
- la figure 4B est une vue de côté schématique du premier élément représenté sur la figure 4A.

### EXPOSÉ DÉTAILLÉ DE MODES DE RÉALISATION PARTICULIERS

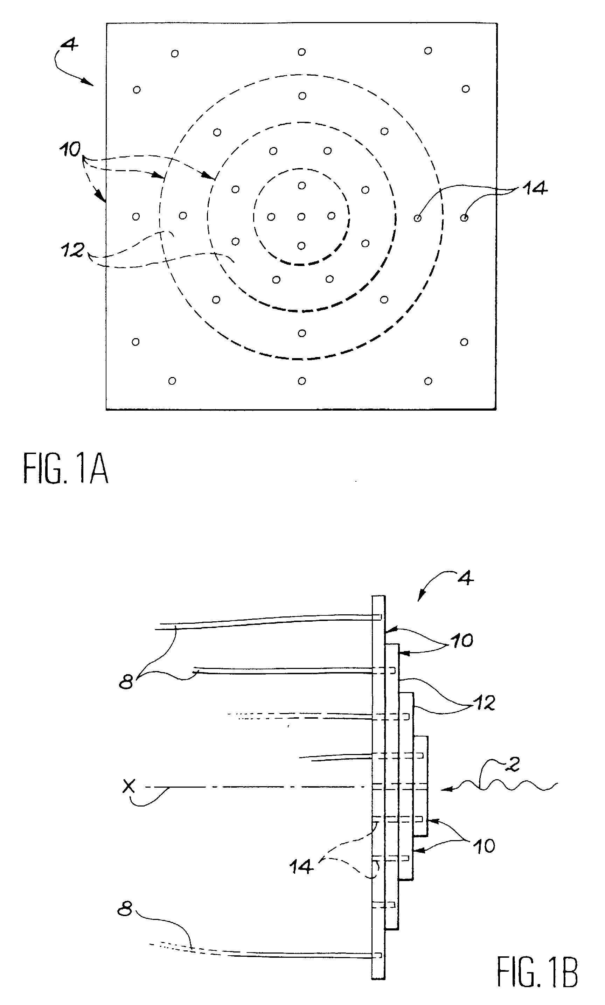

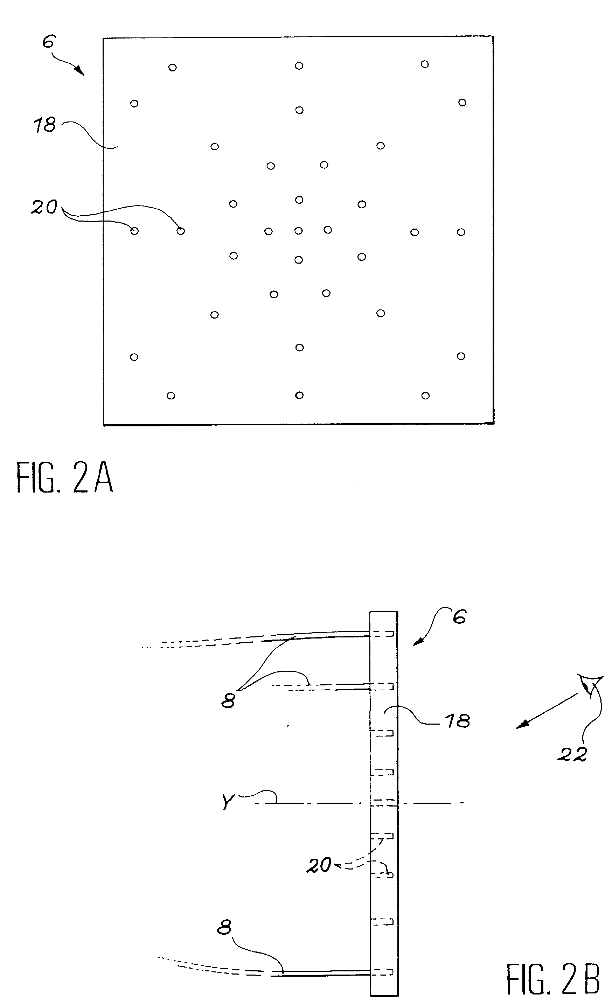

Le dispositif conforme à l'invention, qui est schématiquement représenté sur les figures 1A, 1B, 2A et 2B, est destiné à détecter le point d'impact d'un faisceau lumineux peu divergent 2, issu d'une source lumineuse du type laser par exemple, ce laser pouvant être continu ou pulsé.

Ce dispositif comprend un premier élément 4 appelé « cible », un deuxième élément 6 appelé « partie de visualisation » et un faisceau de fibres optiques 8 qui relie la cible 4 à la partie de visualisation 6.

La cible 4 est faites de plaques 10 qui sont, de préférence, de forme ronde ou carrée et qui sont empilées les unes sur les autres et ont un axe commun X.

Ces plaques 10 sont faites d'un matériau capable d'émettre une lumière incohérente visible lorsqu'ils est frappé par le faisceau laser 2.

On utilise par exemple des plaques en Plexiglas (marque déposée) dopé de manière appropriée pour émettre la lumière, par exemple une lumière jaune lorsque le faisceau laser est de couleur verte.

De telles plaques sont par exemple commercialisées par la société Dacryl.

Les plaques 10 ont des tailles (comptées perpendiculairement à leur axe commun X) qui sont différentes les unes des autres et ces plaques sont rangées par tailles décroissantes comme on le voit sur la figure 1B.

On définit ainsi des marches 12 qui sont des marches périphériques sauf pour la plaque 10 ayant la plus petite taille.

Le côté de la cible 4 où sont les marches 12 est destiné à recevoir le faisceau laser 2.

Des trous 14, dont le nombre est égal à celui des fibres optiques 8, sont formés dans la cible 4 à partir de l'autre côté de celle-ci.

Ces trous ne débouchent pas du côté destiné à recevoir le faisceau laser, ont un fond plat, sont parallèles à l'axe X et répartis suivant une configuration symétrique autour de cet axe X.

L'un des trous 14 s'étend suivant cet axe X.

Ce trou correspond au centre de la cible 4 et l'on veut justement que le faisceau laser tombe sur le centre de la cible 4.

En observant la cible 4 du côté exposé au faisceau laser et suivant l'axe X, on voit que les trous sont répartis le long des diverses marches ainsi que sur la marche supérieure qui correspond à la plaque la plus petite.

Les extrémités des fibres 8 associées à la cible 4 sont collées dans les trous et plaquées au fond de ceux-ci.

Les trous sont percés au diamètre des fibres optiques 8 pour des raisons de tenue mécanique correcte des fibres sur l'épaisseur des plaques.

La distance entre les trous est telle que la lumière émise par l'une des plaques, lors de l'impact du faisceau laser, soit facilement récupérable par l'une des fibres optiques dont l'extrémité se trouve sous la marche correspondant à cette plaque.

La distance entre les trous est fonction de la puissance de la source lumineuse, c'est-à-dire du laser dans l'exemple considéré, et du pouvoir luminescent de la cible 4.

A titre purement indicatif et nullement limitatif, avec un laser vert de classe 1 et une cible jaune, la distance entre les trous est de 3 cm.

Cette distance est déterminable expérimentalement.

Pour ce faire, on place une fibre dans un trou de la cible et l'on déplace le laser jusqu'à extinction de la lumière à l'autre extrémité de la fibre.

On obtient ainsi la distance-limite à laquelle on peut placer une autre fibre.

Le trou central (qui s'étend suivant l'axe X) peut déboucher du côté de la cible exposé au faisceau laser pour permettre un réglage final plus précis.

Dans ce cas, on fait affleurer l'extrémité de la fibre optique correspondant à ce trou central à la surface de la plaque 10 située de ce côté.

Le deuxième élément 6 (partie de visualisation) est formé d'une seule plaque 18 en Plexiglas (marque déposée) qui peut être non dopé ou, au contraire, dopé comme les plaques 12.

La plaque 18 est suffisamment épaisse pour permettre une bonne tenue des fibres optiques 8 dans celle-ci.

Des trous 20, dont le nombre est égal à celui des fibres 8, sont formés dans la plaque 18 à partir d'un côté de celle-ci.

Ces trous ne débouchent pas de l'autre côté de la plaque 18, sont parallèles les uns aux autres, ont des fonds plats et forment la même configuration que les trous 12 de la cible 4.

Un utilisateur 22 observe l'élément 6 (c'est-à-dire la plaque 18) du côté opposé à celui à partir duquel sont formés les trous 20.

Les trous 14 de la cible 4 sont respectivement reliés aux trous homologues 20 de l'élément 6 par les fibres optiques 8.

Les extrémités des fibres, qui sont situées du côté de la plaque 12, sont collées dans les trous 20 correspondants et plaquées au fond de ceux-ci.

Les configurations étant les mêmes, l'élément 6 donne une image représentative de la cible 4.

On est ainsi capable de déterminer avec précision la position d'impact du faisceau laser 2.

On donne la référence Y à l'axe de symétrie de l'ensemble des trous 20.

L'un de ces trous 20 s'étend suivant cet axe Y.

Il s'agit du trou correspondant au trou 14 de la cible 4, qui s'étend suivant l'axe X.

Ce trou 20, qui s'étend suivant l'axe Y, peut déboucher du côté de la plaque 18 que l'on observe, pour permettre de faire sortir, de ce côté, une portion de la fibre optique 8 correspondante.

Ceci permet de connecter cette portion de fibre optique à un appareil de mesure de puissance lumineuse pour terminer le réglage.

Cette connexion est réalisable par exemple au moyen du dispositif de commutation optique décrit dans le document suivant :
Demande de brevet français n°9102833 du 8 mars 1991 (Invention de M. Durand et A. Tchernaieff).

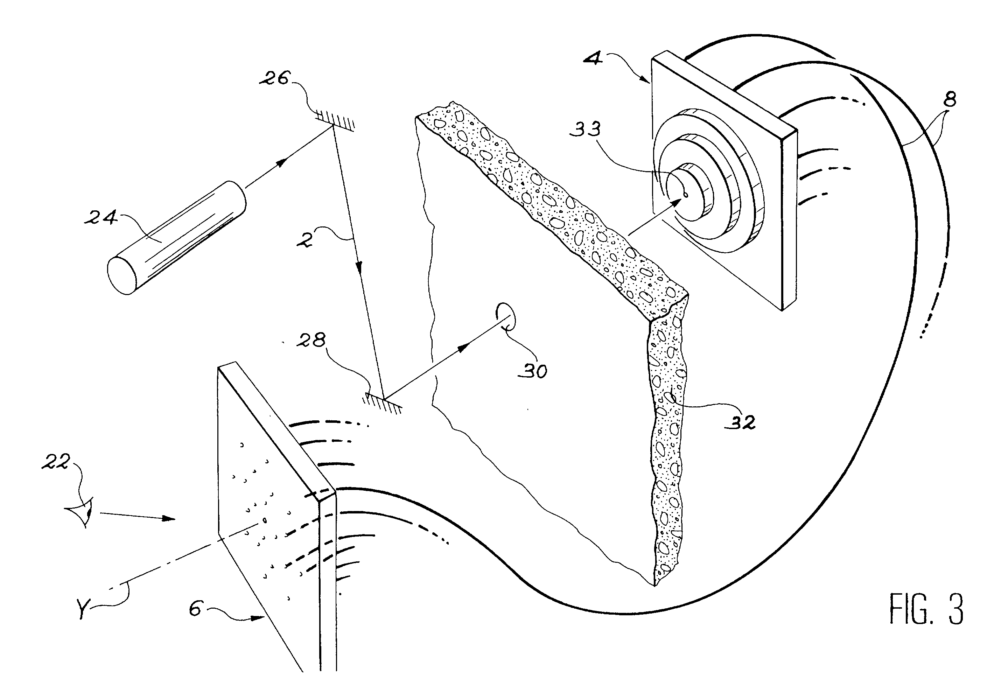

La figure 3 illustre de façon schématique un exemple d'utilisation du dispositif des figures 1A, 1B, 2A et 2B.

Sur cette figure 3, on voit un laser 24 qui émet le faisceau laser 2 dont la position doit être réglée.

Deux miroirs mobiles 26 et 28 permettent de modifier cette position.

Le faisceau laser 2 traverse un perçage 30 formé dans un mur 32 qui gêne l'observation du faisceau au-delà du mur.

On place alors la cible 4 à l'endroit où l'on veut régler la position du faisceau laser 2.

On place l'élément 6, relié à l'élément 4 par les fibres optiques 8, dans la zone où l'on commande les orientations des miroirs 26 et 28.

On modifie les orientations de ces miroirs jusqu'à observer la lumière jaune au bon endroit sur l'élément 6.

En effet, quand le faisceau laser 2 frappe la cible 4, celle-ci devient luminescente à l'endroit 33 de l'impact du faisceau laser.

La lumière est récupérée par la fibre optique la plus proche de cet endroit et conduite vers l'élément 6.

Il faut toutefois noter que plusieurs fibres peuvent recevoir de la lumière suivant la position du point d'impact.

On visualise ainsi directement la position du faisceau laser et l'on peut amener celui-ci à l'endroit voulu en réglant les miroirs 26 et 28.

Si l'on utilise un laser pulsé dont les impulsions sont trop fortes, on risque d'endommager la cible 4 auquel cas il faut
- soit atténuer le faisceau, en disposant des filtres optiques sur son trajet comme cela est expliqué dans le document
   Demande de brevet français n°9300405 du 18 janvier 1993 (Invention de A. Menil)
- soit utiliser un laser continu de faible puissance, colinéaire au laser pulsé.

Pour former la cible 4, on pourrait utiliser une seule plaque suffisamment épaisse ou plusieurs plaques ayant la même taille mais il est préférable d'utiliser des plaques de tailles différentes, comme on l'a vu plus haut, pour ne pas parasiter les fibres trop proches.

En effet, dans ce cas, l'impact sur l'une des plaques de taille inférieure n'a pas de répercussion sur la plaque du dessous.

Bien entendu, on enlève la cible 4 lorsque le faisceau laser 2 est convenablement positionné.

Dans un autre exemple non représenté, une source lumineuse engendre un faisceau lumineux 2 qui est fixe et l'on veut, au contraire, positionner un appareil qui peut être télécommandé dans le champ lumineux de la source.

Dans ce cas, on fixe la cible 4 sur l'appareil qui est mis en mouvement.

Il convient alors de modifier la cible pour permettre sa fixation sur l'appareil en tenant compte des sorties des fibres optiques.

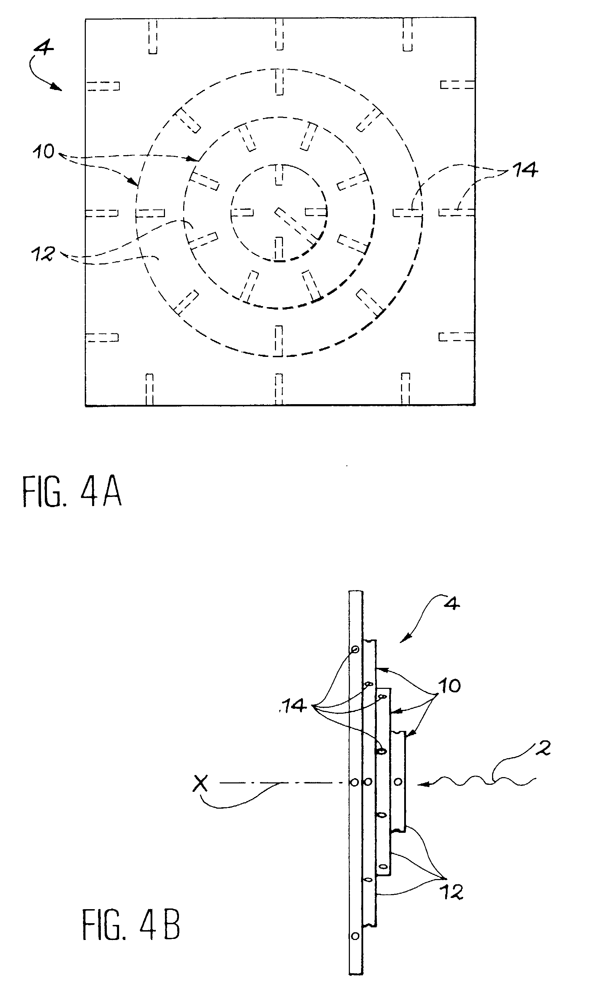

On peut alors utiliser la cible 4 schématiquement illustrée par les figures 4A et 4B.

On voit que les trous 14 sont maintenant formés perpendiculairement à l'axe X dans les plaques 10 correspondantes, à partir de la périphérie de celles-ci.

Les fonds respectifs des trous, observés suivant l'axe X, forment encore la configuration souhaitée.

L'élément 6 est, quant à lui, inchangé.

La profondeur des trous dépend de la taille des fibres optiques utilisées.

Si l'on positionne l'appareil manuellement, on peut mettre la partie de visualisation non plus au poste de réglage du laser mais devant l'appareil à manipuler.

La plaque 18 de la partie de visualisation 6 (figures 2A et 2B) pourrait être remplacée par tout moyen permettant de maintenir les extrémités correspondantes des fibres optiques les unes par rapport aux autres pour former la configuration souhaitée.

## Revendications

1. Dispositif de détection du point d'impact d'un faisceau lumineux peu divergent (2), ce dispositif étant caractérisé en ce qu'il comprend :
- un premier élément (4) dont un premier côté est destiné à recevoir le faisceau lumineux et qui est fait d'un matériau apte à émettre une lumière visible sous l'impact de ce faisceau lumineux,
- un ensemble de fibres optiques (8) dont des premières extrémités respectives sont fixées dans le premier élément, du deuxième côté de celui-ci et suivant une configuration déterminée, et
- un deuxième élément (6) qui maintient les deuxièmes extrémités respectives des fibres optiques dans cette configuration déterminée,
- chaque fibre étant ainsi apte à transmettre, jusqu'à sa deuxième extrémité, la lumière visible engendrée par le premier élément lors d'un impact du faisceau lumineux au voisinage de la première extrémité de cette fibre, de manière à pouvoir repérer la position de cet impact en observant les deuxièmes extrémités des fibres.

2. Dispositif selon la revendication 1, caractérisé en ce que le deuxième élément (6) est transparent à ladite lumière visible et en ce que les deuxième extrémités respectives des fibres optiques (8) sont fixées dans ce deuxième élément suivant la configuration déterminée.

3. Dispositif selon l'une quelconque des revendications 1 et 2, caractérisé en ce que le premier élément (4) est un empilement de plaques (10) ayant un axe commun (X), faites dudit matériau, ayant des tailles différentes et rangées par tailles décroissantes de façon que le premier élément présente des marches (12), en ce que des trous (14) sont formés dans les plaques autour de l'axe commun à celles-ci, les fonds des trous étant situés sous lesdites marches et formant ladite configuration déterminée lorsqu'ils sont observés suivant l'axe commun, et en ce que les premières extrémités respectives des fibres optiques sont logées dans ces trous et en contact avec le fond de ceux-ci.

4. Dispositif selon la revendication 3, caractérisé en ce que les trous (14) sont parallèles à l'axe (X) commun aux plaques et formés à partir du deuxième côté du premier élément (4).

5. Dispositif selon la revendication 4, caractérisé en ce qu'aucun des trous (14) ne débouche du premier côté du premier élément (4).

6. Dispositif selon la revendication 4, caractérisé en ce que l'un des trous (14) s'étend suivant l'axe (X) commun aux plaques et débouche du premier côté du premier élément (4) tandis qu'aucun des autres trous ne débouche de ce premier côté.

7. Dispositif selon la revendication 6, caractérisé en ce que le deuxième élément (6) comprend un trou (20) traversant ce deuxième élément et relié, par l'une des fibres optiques, au trou (14) du premier élément qui débouche du premier côté de celui-ci.

8. Dispositif selon la revendication 3, caractérisé en ce que les trous (14) sont perpendiculaires à l'axe (X) commun aux plaques (10) et formés à partir de la périphérie de ces plaques.
